# EUROPEAN PATENT APPLICATION

(11) **EP 1 696 381 A1**
(43) Date of publication of application: **30.08.2006**
(21) Application number: 06110128.3
(22) Date of filing: 17.02.2006
(51) Int. Cl.: G06Q 30/00, G06Q 40/00

(54) **Systems and Methods for Determining Vehicle Salvage Value**

(30) Priority: 25.02.2005 US 656852 P
(71) Applicant: Copart, Inc., Fairfield, CA 94534 (US)
(72) Inventor: BAUER, David L., Lafayette, CA 94549 (US); ADAIR, Aaron J., Menlo Park, CA 94025 (US); JOHNSON, Willis J., Fairfield, CA 94534 (US)
(74) Representative: Freeman, Jacqueline Carol

(57) **Abstract**

An exemplary system for determining vehicle salvage value includes a valuation subsystem configured to communicate with one or more access devices over a data communication network. The valuation subsystem includes a bid module and a valuation module. The bid module is configured to solicit bids for a vehicle over the data communication network and to receive one or more bids for the vehicle. The valuation module is configured to set a salvage value of the vehicle based on at least one of the received bids. In some examples, the received bids include a high bid, and the valuation module is configured to set the salvage value approximately equal to the high bid. In some examples, the bid module is configured to solicit virtual bids in real time over the data communication network.

## Description

### RELATED APPLICATIONS

The present application claims priority under 35 U.S.C. §119(e) to U.S. Provisional Patent Application No. 60/656,852, by David J. Bauer et al., filed on February 25, 2005, and entitled ONLINE VEHICLE BIDDING SYSTEM, the contents of which are hereby incorporated by reference in their entirety.

The present application also incorporates by reference the entire contents of both U.S. Patent Application No. 10/627,547, filed on July 25, 2003, and entitled ONLINE BIDDING SYSTEM, which claims priority under 35 U.S.C. §119(e) to U.S. Provisional Patent Application No. 60/479,716, filed on June 18, 2003, and entitled ONLINE BIDDING SYSTEM; and U.S. Patent Application No. 10/876,751, filed on June 25, 2004, and entitled ONLINE BIDDING SYSTEM WITH INTERACTIVE VOICE RECOGNITION INTERFACE, which is a continuation in part of the above-listed U.S. Patent Application No. 10/627,547.

### BACKGROUND INFORMATION

When a vehicle is involved in an accident or otherwise damaged, and a claim is submitted to an insurance company, the insurance company decides whether to repair or "total" the vehicle. Typically, the insurance company will deem the vehicle "totaled" when the cost to repair the vehicle is greater than either the value of the vehicle prior to the accident or the value of the vehicle prior to the accident less the salvage value of the vehicle. In such a situation, the insurance company generally reimburses a policyholder the pre-damage value of the vehicle instead of paying for the vehicle to be repaired. In order to determine the pre-damage value of the vehicle, an insurance adjuster usually travels to the vehicle and performs an inspection. The insurance adjuster then sets the pre-damage value based on comparisons with sales of similar vehicles, taking into account factors such as vehicle condition and mileage.

Once an insurance company elects to "total" a vehicle, the policyholder may either accept the reimbursement payment (i.e., the pre-damage value of the vehicle as determined by the insurance adjuster) and relinquish the vehicle or retain the vehicle. When a policyholder elects to retain a vehicle, the insurance company pays the policyholder the value of the pre-damaged vehicle less the salvage value of the damaged vehicle._The right of a policyholder to retain the vehicle is commonly referred to as owner retention. Often, a policyholder will decide to retain the vehicle because it is still drivable, or because the damage is not of concern to the policyholder (e.g., the damage is merely aesthetic).

Insurance companies have conventionally relied on a number of different techniques for estimating vehicle salvage value. Some of these techniques are based on actual salvage values for similar vehicles having similar damage. For instance, the average of actual salvage values of similar vehicles may be calculated and used as an estimated salvage value for a particular vehicle. Other conventional techniques simply calculate and use a predetermined percentage of the pre-damage value of a vehicle. Unfortunately, values generated by the above-described conventional techniques are usually too conservative and frequently inaccurate. That is, the values often fail to accurately represent actual fair market salvage values.

Other conventional techniques involve using one or more salvage experts to determine salvage values. However, it is costly for an insurance company to repeatedly pay for the services of an expert. Moreover, the opinions of experts may vary widely and may still not accurately reflect actual salvage values. The variance between expert opinions only increases when experts are unable to visually inspect the vehicles in question. Unfortunately, this is often the case because insurance companies are reluctant to pay for an expert to travel to inspect a vehicle or to transport the vehicle to the expert for inspection. Moreover, it is not uncommon for policyholders to elect to continue driving damaged vehicles while waiting for insurance companies to settle claims. This usage of the vehicle makes it even more difficult to have the vehicle inspected by an expert.

Other conventional techniques for determining salvage values include insurance adjusters manually requesting and obtaining bids for salvage vehicles. Certain governmental jurisdictions require that insurance companies set salvage values by soliciting actual bids for salvage vehicles. In order to satisfy such requirements, insurance adjusters usually speak with dismantlers or other qualified potential buyers over the telephone to solicit and obtain bids. However, this process is time consuming and often produces values that are even lower than the values produced by the other conventional techniques described above. Dismantlers are generally willing to submit only very low bids without being able to inspect vehicles. This is a common occurrence because, unfortunately, opportunities for visual inspection are often limited for the same reasons discussed above.

Moreover, soliciting bids by telephone generally fails to produce a reliable record of how salvage values are determined. In some instances, for example, a bidder may be induced by the insurance adjuster to offer an unreasonably high bid for the vehicle in order to decrease the liability of the insurance company. Consequently, policyholders may be unknowingly and undesirably affected by unfair practices that go unnoticed when an adequate record is not produced. The lack of an adequate record may also leave insurance companies vulnerable to legal action, including governmental audit and sanction.

In sum, conventional techniques for estimating vehicle salvage values tend to estimate salvage values below fair market value, significantly increase costs for insurance companies, and/or fail to produce an adequate record of how salvage values are determined. Of particular concern, underestimated salvage values cause insurance companies to overpay policyholders in owner retention situations. Of course, costs of business, including costs resulting from such overpayments, are generally passed on to policyholders, including policyholders who have never been involved in an accident. The costs are usually passed on to policyholders in the form of increased premiums and/or decreased coverage.

### BRIEF DESCRIPTION OF THE DRAWINGS

The accompanying drawings illustrate various embodiments of the principles described herein and are a part of the specification. The illustrated embodiments are merely examples and do not limit the scope of the disclosure. Throughout the drawings, identical reference numbers designate identical or similar elements.

Figure 1 is a block diagram illustrating an exemplary system for determining vehicle salvage value, according to principles described herein.

Figure 2 is a block diagram of an exemplary bid module of Figure 1, according to principles described herein.

Figure 3 is an illustration of an exemplary graphical user interface configured to be presented during a preliminary bid stage, according to principles described herein.

Figure 4 is an illustration of an exemplary graphical user interface configured to be presented during a virtual bid stage, according to principles described herein.

Figure 5 is a flowchart illustrating an exemplary process of determining vehicle salvage value, according to principles described herein.

Figure 6 is a flowchart illustrating an exemplary process of determining a disposition of a vehicle based on vehicle salvage value, according to principles described herein.

### DETAILED DESCRIPTION

### I. INTRODUCTION

This specification describes systems and methods for determining a vehicle salvage value. The systems and methods described herein can determine a vehicle salvage value based on one or more actual bids received for a vehicle over a data communication network. These bids each represent an amount a bidder is actually willing to pay for the vehicle if the owner decides not to retain the vehicle and may be binding on and result in a sale of the vehicle to the bidder. In one example of such a system or method, data representative of the vehicle may be posted for access over the data communication network and used to solicit bids for the vehicle. One or more bids may be received and used to set the salvage value of the vehicle. In certain embodiments, for example, the salvage value is set to the value of the highest bid received for the vehicle.

An insurance adjuster may then be notified of the determined salvage value. The insurance adjuster may use the information to determine whether it is more economically practical to deem the vehicle "totaled" or to have the vehicle repaired. In the case that the vehicle is deemed "totaled," the insurance adjuster is able to present at least two options to the policyholder associated with the vehicle: (1) accept full reimbursement (i.e., the determined pre-damage value of the vehicle) and relinquish the vehicle or (2) retain the vehicle and accept the pre-damage value less the determined salvage value of the vehicle. Because the insurance policyholder or owner (referred to collectively as "policyholder" herein) has the right to retain the vehicle, actual sale of the salvage vehicle to the highest bidder should be conditioned upon approval of the policyholder (i.e., the policyholder electing to relinquish the vehicle). The present systems and methods may be configured to provide notification of determined salvage value to the policyholder and/or insurance agent, receive data representative of a decision of the policyholder or insurance agent, and determine a disposition of a vehicle based on the decision. The present systems and methods may be configured to notify potential bidders of "on-approval" sale conditions and of the decisions of policyholders or insurance agents.

By soliciting and receiving bids for vehicles over a data communication network, the systems and methods described herein are able to determine and set salvage values based on what bidders have indicated they are actually willing to pay for vehicles. Use of a data communication network for soliciting bids allows numerous bidders to submit bids, which generally tends to raise bid quantities and values and reaches a more accurate determination of the actual value of the damaged vehicle. Moreover, detailed descriptions of the vehicles, including visual images and/or video, can be provided to potential bidders over the data communication network so that the bidders can visually inspect the vehicles without having to incur travel costs and without the vehicles having to be transported. The ability to visually inspect the vehicles can increase bidder confidence and result in higher bids being placed. These and other aspects of the systems and methods described herein are helpful for determining salvage values that accurately represent the fair market value of vehicles.

Accordingly, the systems and methods described herein can maximize the fair market value of vehicles, thereby helping insurance companies make educated decisions concerning the disposition of vehicles, as well as saving insurance companies money in owner retention situations. As insurance companies compete for business, these savings may be passed on to policyholders in the form of decreased premiums and/or increased coverage.

The systems and methods described herein are also able to produce reliable records indicative of how salvage values are determined. Communications sent over the data communication network may be recorded and archived. Accordingly, insurance companies can use the records to verify the use of legitimate and fair practices for determining salvage values that comply with any applicable rules or laws. Other uses and benefits of the systems and methods described herein will become apparent upon consideration of the following examples.

### II. EXEMPLARY SYSTEM VIEW

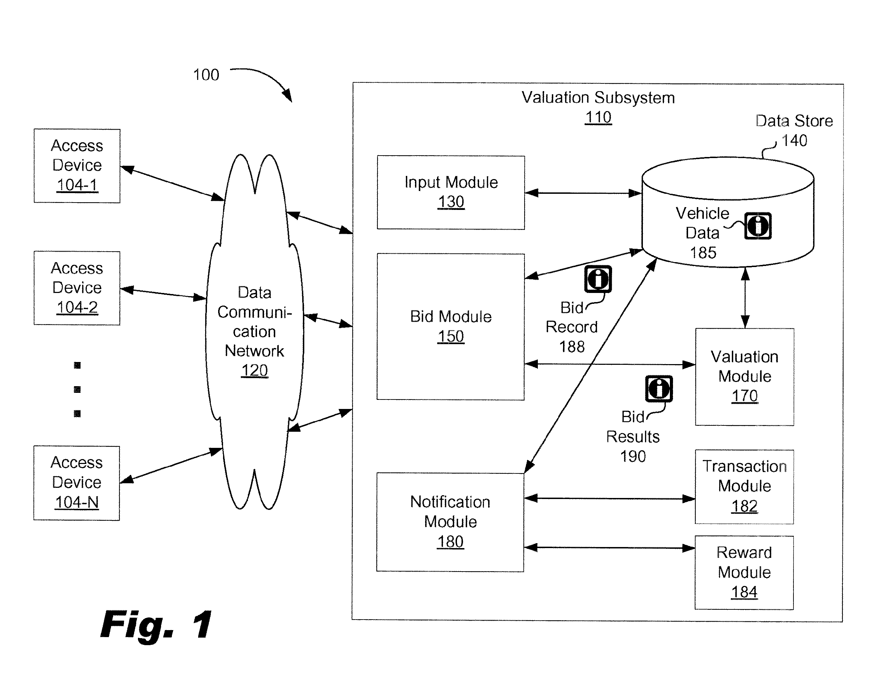

Figure 1 illustrates an example of a system 100 for determining vehicle salvage value. As shown in Figure 1, access devices 104-1 through 104-N (collectively "access devices 104") may be communicatively coupled to valuation subsystem 110 by data communication network 120. In some examples, the data communication network 120 includes the Internet or World Wide Web. Access devices 104 and valuation subsystem 110 may communicate over data communication network 120 using any known communication technologies, devices, media, and protocols supportive of remote communications, including, but not limited to, transmission media, communications devices, Transmission Control Protocol ("TCP"), Internet Protocol ("IP"), File Transfer Protocol ("FTP"), teinet, Hypertext Transfer Protocol ("HTTP"), socket connections, packet-switching technologies, circuit-switching technologies, wireless communication technologies (e.g., cellular telephone and wireless access technologies), and any other suitable communications technologies.

As shown in Figure 1, valuation subsystem 110 may include input module 130, data store 140, bid module 150, valuation module 170, notification module 180, transaction module 182, and reward module 184 communicatively coupled as shown in the Figure. The elements of valuation subsystem 110 may communicate using any suitable communication technologies, including any of the communication technologies previously listed. Input module 130 may receive vehicle data 185, which can be stored in data store 140. Bid module 150 may use the vehicle data 185 to put one or more vehicles up for bid over data communication network 120, as described in detail below. Bidders may use access devices 104 to submit bids for the vehicles. Bid module 150 may receive bids and generate a record of the bids and corresponding bid processes. The record may be referred to as bid record 188 and may be stored to data store 140. From the bids received, bid module 150 may generate and provide bid results 190 to valuation module 170, which may be configured to use the bid results 190 to determine values associated with vehicles, including salvage values of vehicles. Notification module 180 may be used to communicate determined values to users (e.g., insurance adjusters) of access devices 104 and to receive acceptance and/or rejection messages (e.g., messages representative of decisions to retain or relinquish vehicles) from the users. Notification module 180 may also notify bidders whether sales of vehicles have been approved or rejected. When sales are approved, transaction module 182 may perform operations helpful for completing the transactions. When owners retain vehicles and the high bid is consequently rejected for purposes of a sale, reward module 184 may still assign rewards to the highest bidder, as will be described in more detail below.

In certain embodiments, valuation subsystem 110 is implemented in one or more computers. Valuation subsystem 110 may include any computer hardware and/or instructions (e.g., software programs), or combinations of software and hardware, configured to perform the processes described herein. In particular, it should be understood that valuation subsystem 110 may be implemented on one physical computing device or may be implemented on more than one physical computing device. Accordingly, valuation subsystem 110 may include any one of a number of computing devices known to those skilled in the art (e.g., one or more servers), and may employ any of a number of computer operating systems known to those skilled in the art, including, but by no means limited to, known versions and/or varieties of the Microsoft Windows® operating system, the Unix operating system, and the Linux operating system.

Accordingly, those skilled in the art will recognize that the processes described herein may be implemented at least in part as instructions executable by one or more computing devices. In general, a processor (e.g., a microprocessor) receives instructions, e.g., from a memory, a computer-readable medium, etc., and executes those instructions, thereby performing one or more processes, including one or more of the processes described herein. Such instructions may be stored and transmitted using a variety of known computer-readable media.

A computer-readable medium (also referred to as a processor-readable medium) includes any medium that participates in providing data (e.g., instructions) that may be read by a computer (e.g., by a processor of a computer). Such a medium may take many forms, including, but not limited to, non-volatile media, volatile media, and transmission media. Non-volatile media may include, for example, optical or magnetic disks and other persistent memory. Volatile media may include, for example, dynamic random access memory ("DRAM"), which typically constitutes a main memory. Transmission media may include, for example, coaxial cables, copper wire and fiber optics, including the wires that comprise a system bus coupled to a processor of a computer. Transmission media may include or convey acoustic waves, light waves, and electromagnetic emissions, such as those generated during radio frequency ("RF") and infrared ("IR") data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, any other memory chip or cartridge, or any other medium from which a computer can read.

While an exemplary system 100 is shown in Figure 1, those skilled in the art will recognize that the exemplary components illustrated in the Figure are not intended to be limiting. Indeed, those skilled in the art will recognize that other alternative hardware environments and implementations may be used. Each of the components of system 100 will now be described in additional detail.

### A. Access Devices

Each access device 104 may include any device or devices physically or remotely accessible to one or more users and that allows a user to provide input to and/or receive output from valuation subsystem 110. For example, access device 104 can include, but is not limited to, one or more desktop computers, laptop computers, tablet computers, personal computers, personal data/digital assistants, cellular telephones, satellite pagers, wireless internet devices, embedded computers, video phones, network interface cards, modems, optical network terminals, mainframe computers, mini-computers, programmable logic devices, vehicles, entertainment devices, gaming devices, music devices, wireless communication devices, wireline communication devices (e.g., Plain Old Telephone Service ("POTS") telephones), analog telephone adapters ("ATAs"), devices operating softphones, devices operating Java Virtual Machines, Internet Protocol ("IP") devices (e.g., IP-based phones), Session Initiation Protocol ("SIP") devices (e.g., SIP phones), and any other devices capable of communicating with valuation subsystem 110 over data communication network 120. Access device 104 can also include various peripherals such as a terminal, keyboard, keypad, mouse, screen, printer, stylus, microphone, audio speaker, input device, output device, or any other apparatus that can help a user interact with access device 104.

Access devices 104 may include instructions for generating and operating user interfaces. These instructions may be in any computer-readable format, including software, firmware, microcode, and the like. When executed by a processor (not shown) of a particular access device 104, the instructions may present one or more user interfaces to a user. The user interfaces may be configured to present information to and receive input from users. For example, the user interface(s) described herein present information to users regarding a damaged vehicle and receive from users bids to purchase that vehicle. The user interfaces may comprise one or more graphical user interfaces ("GUI") capable of displaying information and receiving input from users. In certain embodiments, the user interfaces include one or more web browsers, such as Internet Explorer® offered by Microsoft Corporation of Redmond, Washington.

However, the user interfaces are not limited to graphical interfaces or web form embodiments and may include many different types of user interfaces that enable users to utilize access devices 104 to communicate with valuation subsystem 110. In certain embodiments, for example, user interfaces may include one or more voice interfaces capable of receiving input from and providing output to a user. Accordingly, valuation subsystem 110 may include technologies for processing voice and data signals, including voice recognition technologies and technologies for converting between voice and text (e.g., voice-to-text and/or text-to-voice converters).

Access devices 104 may include any combination or subset of the above-listed devices. Merely by way of example, one or more of the access devices 104 may include personal computers, while other access devices 104 may include other device types, such as cellular telephones. Regardless of the type or combination of devices, access devices 104 are able to communicate with valuation subsystem 110 over data communication network 120. Access devices 140 may be configured to utilize any suitable access technologies to access data communication network 120, including, but not limited to, known access networks, media, and protocols.

### B. Data Communication Network

Data communication network 120 may include one or more networks suitable for carrying communications between access devices 104 and valuation subsystem 110. For example, data communication network 120 may include, but is not limited to, the Internet, World Wide Web and/or one or more intranets, local area networks, wide area networks, voice communication networks (e.g., the Public Switched Telephone Network ("PSTN"), Voice over Internet Protocol ("VoIP"), and wireless telephone networks), access networks, packet-switched networks, circuit-switched networks, and any other communications networks capable of carrying communications between access devices 104 and valuation subsystem 110. Communication network 120 may include any devices, media, and technologies helpful for carrying communications between access devices 104 and valuation subsystem 110.

### C. Valuation Subsystem

As mentioned above, valuation subsystem 110 may include any device or combination of devices (e.g., servers) useful for communicating with access devices 104 over data communication network 120. Valuation subsystem 110 may be configured to include and/or utilize any suitable access technologies, including, but not limited to, servers (e.g., web servers), security technologies, access levels, predefined access rules, firewalls, user lists, sign-on technologies, and any other technologies for controlling access to valuation subsystem 110. In certain embodiments, valuation subsystem 110 is configured to restrict access to registered users. Valuation subsystem 110 may include any known technologies for registering and validating users.

Valuation subsystem 110 may be configured to recognize different classes of users and to provide different predefined levels of access to the different user classes. For example, one class of users may include persons or entities desiring to have vehicles valued by valuation subsystem 110. Such users may include agents of insurance companies (e.g., insurance adjusters). Valuation subsystem 110 may provide specific functions to this class of users, including mechanisms by which the users can provide vehicle data 185, e.g., photographs of the damaged vehicle, and other input to valuation subsystem 110. Another class of users may include persons or entities who/that submit or wish to potentially submit bids for damaged vehicles. This class of users, referred to herein as "bidders," may be granted access to functions for bidding on vehicles. Yet another possible class of users may include policyholders associated with vehicles being valuated.

Valuation subsystem 110 may receive a variety of information from access devices 104. For example, valuation subsystem 110 may receive data representative of user registration and/or logon information, information associated with or descriptive of one or more vehicles, e.g., photographs of the damaged vehicle, bids placed by users of access devices 104, and decisions of insurance agents and/or policyholders. Valuation subsystem 100 may also make a variety of information accessible to access devices 104. For example, valuation subsystem 110 may provide data representative of user registration and/or logon information, information associated with or descriptive of one or more vehicles, information associated with bids or bid processes, information associated with the outcome of bids (e.g., notifications of winning bids), and notifications of determined vehicle values. Exemplary elements and functions of valuation subsystem 110 will now be described in additional detail.

### 1. Input Module

Input module 130 may be configured to provide and/or receive data to/from users who are approved to upload data representative of vehicle information. As mentioned previously, such users may include agents of insurance companies (e.g., insurance adjusters) and other pre-approved users. Insurance adjusters typically use some of the access devices 104 to provide vehicle data 185 to input module 130 through data communication network 120. Vehicle data 185 may include, but is not limited to, text, audio, visual, and/or video descriptions or representations of vehicles, including descriptions of the conditions of vehicles, visual images of vehicles, vehicle maintenance records, vehicle histories, third-party valuations (e.g., Kelly Blue Book® values), vehicle mileage, vehicle color, vehicle features (e.g., leather seats, stereo make and model, engine specifications, navigation system, etc.), title information, estimated values of vehicles (e.g., pre-damage values of vehicles as determined by insurance adjusters), damage descriptions, vehicle locations, and any other information potentially useful for describing and/or valuating a vehicle.

Insurance adjusters may obtain or generate information descriptive of vehicles during visual inspection of the vehicles. The insurance adjusters can then use access devices 104 to upload data representative of the information to input module 130. As described below, vehicle data 185 may be used to present vehicles for bid over data communication network 120 without the vehicles having to be transported or physically present at any specific location because the vehicle data 185 was previously obtained and provided to valuation subsystem 110.

Input module 130 may be configured to provide templates (e.g., Hypertext Mark-up Language ("HTML") templates) to access devices 104, the templates being designed to accept input from users of access devices 104. The templates may define user interfaces helpful for input of vehicle data 185.

Input module 130 may be configured to provide received data (e.g., vehicle data 185) to data store 140, which can store the data for subsequent access and use.

### 2. Data Store

Data store 140 may include one or more data storage mediums, devices, or configurations and may employ any type, form, and combination of storage media known to those skilled in the art, including hard disk drives, read-only memory, caches, databases, optical media, and random access memory. Data store 140 may include any known technologies useful for storing, updating, modifying, accessing, retrieving, and deleting data.

Data store 140 may include any suitable type or form of electronic data representative of or associated with vehicles, user access privileges, bid records (described further below), and any other information that may be potentially useful for soliciting bids and/or valuating vehicles, including vehicle data 185, bid record 188, and bid results 190. The data may be stored in extensible markup language ("XML"), or in any suitable form.

While Figure 1 illustrates data store 140 as being included in valuation subsystem 110, this is not limiting. For example, valuation subsystem 110 may be configured to store and/or retrieve data to/from external data sources. Any data potentially helpful for valuating vehicles, managing user access, and/or communicating with users may be retrieved from any suitable and accessible internal or external data source.

### 3. Bid Module

Bid module 150 may be configured to use vehicle data 185 to place one or more vehicles up for bid over data communication network 120. For example, bid module 150 may retrieve at least a subset of vehicle data 185 from data store 140 and make the retrieved data (or a copy of the retrieved data) available for access over data communication network 120. Accordingly, bidders can utilize access devices 104 to consider and place bids on vehicles represented by vehicle data 185. By soliciting and receiving bids over a data network such as data communication network 120, valuation subsystem 110 makes vehicle information widely accessible, which accessibility can in many instances increase the quantity and value of bids received for vehicles as compared to conventional techniques for estimating salvage values. Receiving bids over data communication network 120 allows bids to be received and salvage values determined in an efficient, justifiable, cost-effective, and automated manner.

Soliciting bids over data communication network 120 also enables the presentation of helpful information associated with vehicles, which information can increase bid amounts and bidder confidence. For example, bid module 150 may provide any aspect of vehicle data 185 described above as part of a bid solicitation, including any combination of visual images, video, written description, and audio description of vehicles. Bidders may be provided with access to a dynamic picture that may be rotated up to 360 degrees for viewing from different perspectives. By having access to helpful vehicle information such as visual images of vehicles, bidders can make educated and confident bids, which may in certain cases help increase the values of winning bids.

As mentioned above, bidders may use access devices 104 to access and consider bid solicitations over data communication network 120. In certain embodiments, for example, bidders may use one or more domain names and/or IP addresses to access one or more sites (e.g., a websites) hosting bid processes or bid modules as described herein.

Bid module 150 may be configured to limit access to qualified bidders. For example, bid module 150 may request valid registration information from users before the users will be granted access. Accordingly, bid module 150 may maintain any registration information useful for controlling access to bid solicitations. Bid module 150 may be configured to receive registration information (e.g., user name, business name, contact information, payment information, password, etc.) associated with new users seeking registration.
Once registration is completed, bid module 150 may provide the registered users with access to one or more bid processes supported by bid module 150. A separate bid process may be conducted by bid module 150 for each vehicle being valued or for a batch of one or more vehicles being valued.

Bid module 150 may also be configured to control which registered bidders are allowed to bid on specific vehicles. Bid module 150 may include predefined rules configured for use in identifying approved bidders. The predefined rules may determine who is allowed to bid on a particular vehicle. The rules may be defined in accordance with laws or governmental regulations such as license requirements for purchasing vehicles having specific types of titles (e.g., salvage titles). Bid module 150 may also be configured to track and limit the number of bids accepted from or sales made to bidders, including the number of bids or sales within a predetermined length of time. The limits may be based on governmental regulations or business policies. Regulation of bids and sales can help prevent fraud, abusive practices, and potentially illegal activities.

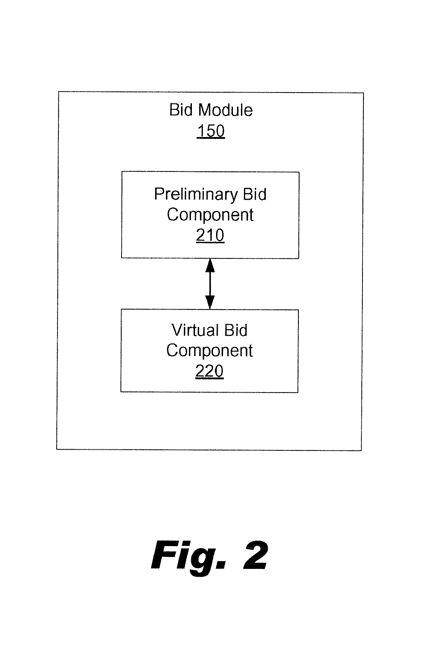

In certain embodiments, bid module 150 is configured to provide a two-stage bidding process. Figure 2 is a block diagram of the bid module 150 of Figure 1, according to a particular example. As shown in Figure 2, bid module 150 may include preliminary bid component 210 and virtual bid component 220, which may be configured to work together to provide a two-stage bid process, which will now be described in detail.

### a. Preliminary Bid Stage

The first stage of an exemplary two-stage bid process may be referred to as a preliminary bid stage and may be provided by preliminary bid component 210. The preliminary bid stage may be a static bid stage during which one or more bidders can consider and bid on any vehicle(s) in a batch. In the preliminary bid stage, preliminary bid component 210 may group one or more vehicles into a batch (i.e., a "sale list") and present the batch for consideration by one or more bidders. A batch may include vehicles that are grouped based on geographic locations, sale dates, and/or other suitable criteria. For example, a batch may include vehicles having a common predetermined preliminary bid stage closing time and/or a common virtual bid start time. The vehicles in a batch may be concurrently made available for bidding during the preliminary bid stage.

The preliminary bid stage may be configured to last for a predefined duration of time (e.g., until a predetermined closing time).
Accordingly, bidders are able to consider and bid on any of the one or more vehicles in the batch within the predefined duration of time. Typically, the duration of the preliminary bid stage is measured in days or weeks. Such durations provide ample time for bidders to consider and place preliminary bids on many different vehicles. Of course, any suitable duration of time may be used. The duration of time and/or scheduled close time of the preliminary bid stage may be determined and defined by an operator of valuation subsystem 110.

In certain embodiments, bid module 150 is configured to present, over data communication network 120, a list of the vehicles in a batch along with one or more mechanisms (e.g., hyperlinks) by which bidders can select specific vehicles for additional information and/or bidding. For example, the list of vehicles in a batch may be presented in a particular user interface (e.g., a graphical user interface ("GUI")), and when a vehicle is selected, another user interface having additional information associated with the selected vehicle and/or with bidding may be presented.

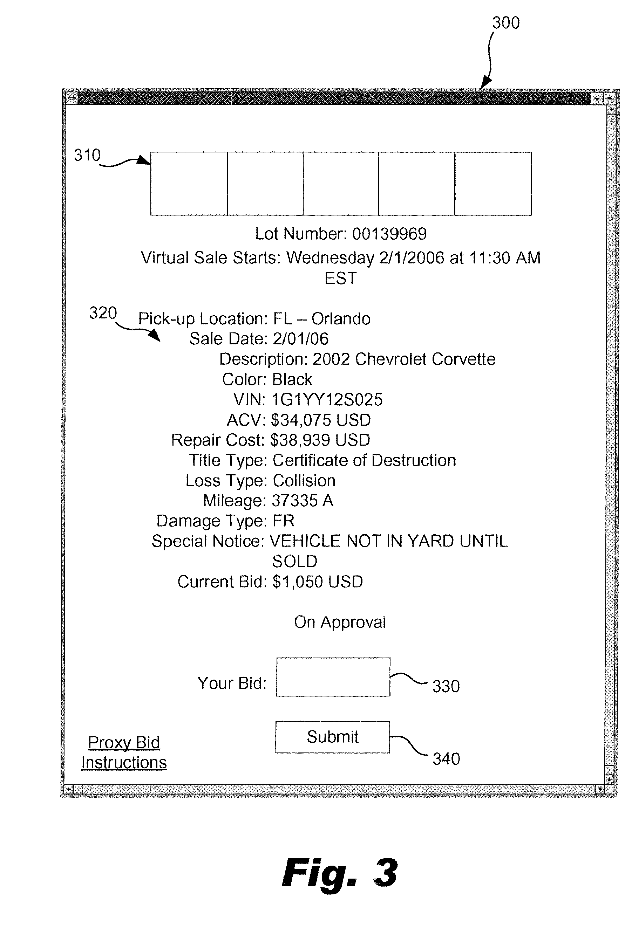

Figure 3 illustrates an exemplary preliminary bid interface 300 that preliminary bid component 210 may present to a bidder during the preliminary bid stage. Preliminary bid component 210 may be configured to present preliminary bid interface 300 in response to a bidder selecting to view additional information about a particular vehicle included in a batch of vehicles.

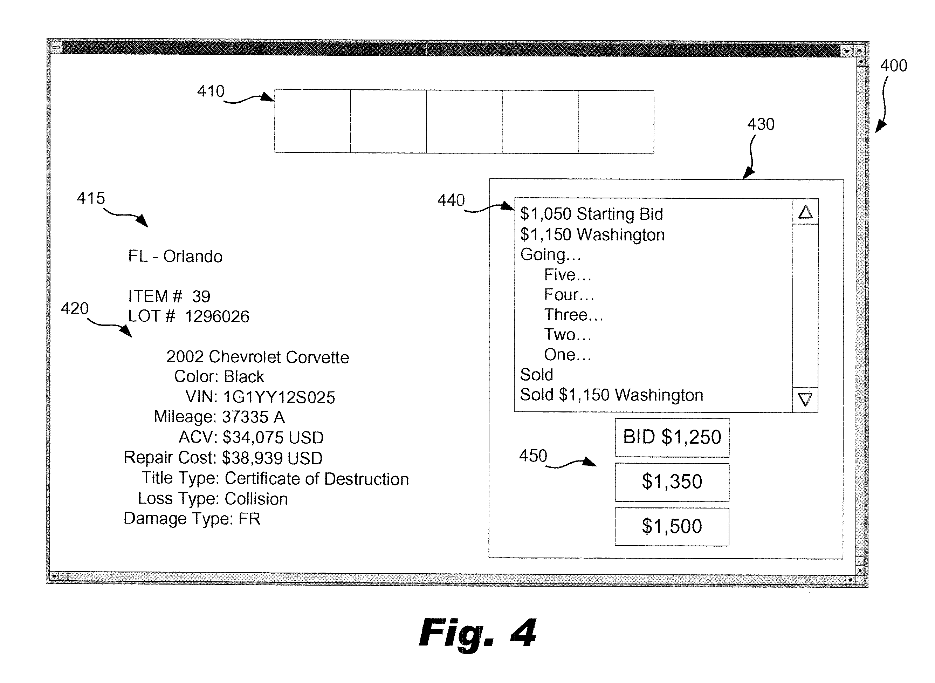

As shown in Figure 3, preliminary bid interface 300 may include information associated with a particular vehicle, including any or all information included in vehicle data 185. For example, preliminary bid interface 300 may include visual images of the vehicle 310, a written description of the vehicle 320, a bid entry window 330, and a submit bid icon 340. Bid entry window 330 and submit bid icon 340 can be used by bidders to enter and submit preliminary bids. Alternative to or in addition to bid entry window 330, preliminary bid interface 300 may include bid entry icons (such as bid matrix 450 described below in reference to Figure 4) for quick entry of specific bid amounts.

As shown, preliminary bid interface 300 may include a lot number, an indication of the scheduled begin time of the virtual bid stage (described further below) in which the vehicle will be included, a pick-up location identifier (e.g., the name of a vehicle yard near to the policyholder associated with a vehicle), a pre-damage vehicle value (shown as actual cash value ("ACV")), a repair cost, title information (e.g., salvage or clean title), loss type (e.g., property or collision damage), mileage, damage type description or code, and current high bid amount. The current bid shown in Figure 3 represents the current high preliminary bid. Preliminary bid interface 300 may also include any other potentially useful information. For example, preliminary bid interface 300 may include notices, instructions, or disclaimers associated with vehicle bidding, including instructions for placing bids (e.g., instructions associated with proxy bids, which are described below) and/or notices that the vehicle is not yet in a vehicle yard and/or that bids are subject to approval (e.g., sales are conditioned on the approval of the policyholder or insurance company associated with the vehicle). As mentioned above, the information presented to bidders may encourage placement of high bids because bidders can ascertain the condition of vehicles and confidently submit educated bids. In particular, visual images 310 are valuable for conveying the condition of vehicles while avoiding or minimizing travel and transportation costs.

Preliminary bid component 210 may be configured to support proxy bidding, which allows any bidder, referred to hereinafter as the first bidder, to enter a maximum bid value (i.e., a proxy bid) for a vehicle. This maximum bid value may represent the maximum amount the first bidder is willing at that time to pay for the vehicle in question and may be significantly more than the current high bid for that vehicle. Preliminary bid component 210 can then automatically place increasingly higher bids in pre-determined increments on behalf of the first bidder in response to bids placed by other bidders that outbid the first bidder.
This may continue up to the maximum bid value authorized by the first bidder.

A bidder may submit a proxy bid in any suitable manner. For example, preliminary bid component 210 may provide a mechanism by which a bidder can identify a bid as being a proxy bid. Alternatively, preliminary bid component 210 may be configured to automatically treat a bid amount in excess of a predefined bid increment as a proxy bid. To illustrate, if the current high bid for a vehicle is $500 by a first bidder, and the minimum bid increment is $50, a subsequent bid greater than $550 submitted by another bidder can be treated as a proxy bid if it is at least $100 more than the current high bid. If a second bidder provides a bid of $1000, preliminary bid component 210 may be configured to set the current high bid for the vehicle to $550 on behalf of the second bidder. If the first bidder (or another bidder other than the second bidder) then bids $600, preliminary bid component 210 may be configured to automatically increase the bid of the second bidder to $650. This may continue until the second bidder remains the high bidder, or until the maximum bid submitted by the second bidder (i.e., $1000) is reached. The second bidder can still submit subsequent bids if desired. Thus, preliminary bid component 210 can incrementally and automatically increase the current bid for a vehicle on behalf of a bidder up to the maximum bid value specified by the bidder.

Although not shown in Figure 3, one or more user interfaces associated with the preliminary bid stage may include an indication of the predetermined time at which preliminary bid component 210 is scheduled to close the preliminary bid stage. A countdown timer indicating the amount of time remaining until the scheduled close of the preliminary bid stage may also be presented.

The preliminary bid stage may be helpful to bidders trying to identify specific vehicles in which they are interested. Bidders may also use the preliminary bid stage to analyze, from bids received for vehicles, the level of interest in those vehicles and can then better estimate how high a bid the vehicle will eventually fetch in the virtual bid stage. In certain cases, bidders may be able to eliminate vehicles from consideration without having to spend time going to a live auction or participating in a corresponding virtual bid stage. Accordingly, the preliminary bid stage can be a valuable time-saving tool for many bidders.

The preliminary bid stage can also attract numerous potential bidders and thereby increase the level of interest in vehicles. The amounts bid for vehicles will increase with an increase in the number of bids received. Additionally, the preliminary bid stage may serve to increase participation in the virtual bid stage, which can further help to increase bid amounts.

Referring back to Figure 2, preliminary bid component 210 is configured to close the preliminary bid stage at the predetermined time set to mark the end of the preliminary bid stage. Once the preliminary bid stage is closed, preliminary bid component 210 no longer receives preliminary bids. However, preliminary bids are only preliminary, and winning bids and bidders are not determined until completion of a second bid stage referred to as a virtual bid stage, which may be provided by virtual bid component 220. In other words, regardless of what happens in the preliminary bid stage, bidding will proceed to the virtual bid stage, in which a winning bid will be determined. A winning bid can be a bid received during the virtual bid stage, the high preliminary bid received during the preliminary bid stage if no virtual bids are subsequently received, or a proxy bid carried over from the preliminary stage that is not surpassed during the virtual bid stage.

### b. Virtual Bid Stage

Virtual bid component 220 may be configured to open the second bid stage at a predefined time or in a predefined time interval after closure of the first bid stage. The predefined time or time interval may be defined by an operator of valuation subsystem 110. In certain embodiments, for example, virtual bid component 220 is configured to open the virtual bid stage approximately one hour after closing of the preliminary bid stage. Of course, any suitable time interval may be used between the first and second bid stages.

Bid module 150 may be configured to notify bidders of the start of a particular virtual bid stage. Notification may be provided at the start or in advance of the virtual bid stage. Bidders may request notification for specific virtual bid stages. For example, a bidder may submit a request over data communication network 120 to be notified of the initiation of a virtual bid stage in which a particular vehicle will be placed up for bid.

Bid module 150 may notify bidders in any suitable manner, including providing messages over data communication network 120. In certain embodiments, for example, a message is posted at a site (e.g., a website) configured to host a virtual bid stage or a preliminary bid stage associated with the virtual bid stage. Other forms of notification may be used, including, but not limited to, e-mail messages, text messaging, instant messaging, voicemail messages, audible messages, recorded voice calls, pager messages, and any other suitable communication technology.

In the virtual bid stage, virtual bid component 210 may present one or more vehicles for consideration by one or more bidders. Vehicles in a batch may be presented consecutively such that within a particular batch of vehicles bidding is open for one vehicle at a time. When any particular vehicle is up for bid, bidders may submit virtual bids for the vehicle dynamically and in real time. Thus, vehicles in a batch may be offered up for bid consecutively during the virtual bid stage with each of the vehicles remaining up for bid until a high bid has been determined for the vehicle. The high bid may be determined when no subsequent higher bids are received within a predetermined time interval. As discussed below, the highest bid for a vehicle may be used to set a salvage value of the vehicle.

The virtual bid stage may be configured to emulate certain aspects of a traditional live auction but in a virtual environment accessible over data communication network 120. In other words, virtual bid component 220 may be configured to provide a virtual, real-time bidding environment that is designed to instill in bidders the same or similar feelings and reactions brought on by attending a traditional live auction. Consequently, the virtual bid stage may encourage bidders to bid and to continue bidding, even when bidders are located at different and remote geographic locations. By emulating aspects of a traditional live auction, the virtual bid stage helps maximize the amounts of winning bids received for vehicles. Accordingly, system 100 can determine salvage values that are reflective of actual and fair market values. Insurance companies are able to use the salvage values having confidence that the values accurately reflect fair market values because the values were determined in an acceptable and documented manner and represent actual bids that bidders may be required to pay for the vehicle in question.

Starting bids in the virtual bid stage may be set based on preliminary bids received during the preliminary bid stage. In certain embodiments, for example, starting bids in the virtual bid stage are set equal to, or approximately equal to, the high preliminary bids received during the preliminary bid stage for corresponding vehicles. In other words, a high bid in the preliminary bid stage may be carried over and used as the starting bid in the virtual bid stage. In other embodiments, starting bids in the virtual bid stage may be set to a predefined percentage or amount above or below the high preliminary bids received during the preliminary bid stage. For example, a starting bid in the virtual bid stage may be set to a value approximately ten percent (10%) above the high bid received during the preliminary bid stage for a particular vehicle.

By setting starting bids based on preliminary bids received in the preliminary bid stage, virtual bid component 220 provides an efficient virtual bid process. For example, the time to determine a high bid in the virtual bid stage may be significantly reduced as compared to the time this would take in a traditional live auction because at least a portion of bidding has already taken place during the preliminary bid stage. Accordingly, virtual bid component 220 is able to efficiently determine the highest bid for a vehicle.

If no preliminary bid is received for a vehicle during the preliminary bid stage, a default bid may be used as the starting bid in the virtual bid stage. The default bid can be placed any time prior to the start of virtual bidding. In certain embodiments, for example, a default bid is placed approximately one day before the virtual bid stage is scheduled to begin. When the default bid is placed, it will become the starting bid in the virtual bid stage as long as no other preliminary bid is received after placement of the default bid. However, if a preliminary bid is received after placement of the default bid, the last preliminary bid received during the preliminary bid stage will be used as the starting bid. The default bid may be placed on behalf of a particular party such as a junk buyer. Junk buyers may bid for the right to have their bids be used as default bids for vehicles not receiving any preliminary bids during the preliminary bid stage.

Virtual bid component 220 may be configured to provide one or more virtual bid interfaces to access devices 104 for consideration by bidders. The user interfaces may include information associated the virtual bid process including vehicle information and real-time bid information. Figure 4 illustrates an exemplary virtual bid interface 400 that virtual bid component 220 may present to a bidder during the virtual bid stage. Virtual bid component 220 may be configured to present virtual bid interface 400 in response to a bidder selecting to participate in virtual bidding associated with a batch of one or more vehicles. In certain embodiments, a bidder may select multiple virtual bid batches, and multiple virtual bid interfaces may be presented to the bidder simultaneously. For example, multiple virtual bid interfaces in the form of multiple graphic user interfaces may be displayed simultaneously at a particular access device 104, giving a bidder the ability to concurrently monitor multiple virtual bid batches.

As shown in Figure 4, virtual bid interface 400 may include information associated with a particular vehicle currently up for bid. For example, virtual bid interface 400 as shown in Figure 4 includes visual images 410 of the vehicle, a location identifier associated with a vehicle yard 415 (e.g., a yard at which a buyer can pick up the vehicle), an item number, a lot number, and a written description of the vehicle 420. In Figure 4, the written description 420 includes the vehicle make, model, year, color, vehicle identification number ("VIN"), and mileage, as well as a pre-damage value of the vehicle (denoted as "ACV" for actual cash value), repair cost, title information (e.g., certificate of destruction or salvage certificate), loss type (e.g., collision), and damage description (e.g., all over, front end, rear end, etc.). Of course, virtual bid interface 400 may include other information associated with the vehicle (e.g., video footage of the vehicle), including any information potentially helpful for encouraging and/or helping bidders to submit bids for the vehicle.

Virtual bid interface 400 may also include information related to performance of virtual bid processes. In Figure 4, virtual bid interface 400 includes a bid section 430 having bid information therein. Bid information can include any information descriptive of performance of virtual bid processes and events. As shown in the Figure, bid section 430 may include a bid log 440 configured to depict virtual bid events. The bid log 440 may include text, audio, visual images, or any combination of messages and message types that are potentially useful for indicating bid events. The messages may be presented in real time and may help to inform and motivate bidders.

Virtual bid component 220 is configured to control the messages presented by bid log 440. Accordingly, virtual bid component 220 can function as a virtual, electronic auctioneer by providing, over data communication network 120, electronic messages descriptive of virtual bidding events. With respect to the text messages provided in the bid log 440 of Figure 4, the bid log 440 may begin virtual bidding for a vehicle by displaying a starting bid amount (e.g., $1,050 in Figure 4) and an indication that this amount is the starting bid. Upon posting of the starting bid, virtual bid component 220 then initiates a countdown. If a bid greater than the starting bid is not received within a predetermined time interval, the vehicle will be sold (subject to approval) to the bidder who submitted the starting bid. This is typically the bidder who submitted the highest preliminary bid during the preliminary bid stage. On the other hand, if a bid greater than the starting bid is received within the predetermined time interval, the new bid (e.g., $1,150 in Figure 4) is displayed as the current high bid, and the countdown timer is reset. Similar to a traditional live auction, the countdown timer gives bidders a time limit after each bid within which to submit a higher bid. As shown in Figure 4, this countdown may be visually and/or audibly displayed (e.g. Going, Five, Four, Three, Two, One, Sold) so that bidders are encouraged to enter additional bids before the countdown has elapsed.

Along with a display of the current bid, virtual bid component 220 may also present additional information. In certain embodiments, for example, a general location identifier such as a city, state, province, or country may be displayed along with accepted bids. Other embodiments may omit this information or present different types of information. Display of a general location identifier together with each accepted bid may help bidders factor shipping costs into bidding strategies. For example, a bidder located in Florida who is bidding on a vehicle also located in Florida will be able to ascertain an apparent advantage over a bidder located in California who may have to pay higher fees to have the vehicle transported to California. Display of a location identifier together with each accepted bid may also inform bidders of the magnitude and mass appeal of system 100. Significantly, bidders from anywhere in the world can be brought together by the system 100 to bid for vehicles or other items being valued or sold.

Virtual bid component 220 may be configured to present a countdown sequence in bid log 440. The countdown sequence may be designed to correspond with and illustrate progress of the countdown timer. The countdown sequence may be any stream of messages configured to inform a bidder of the progress of the countdown timer. Accordingly, the countdown sequence can alert a bidder that a bid should be submitted quickly in order not to lose an item. In certain embodiments, for example, a countdown sequence is configured to include a sequentially timed display of the phrases "going...," followed by "five...," followed by "four...," followed by "three...," followed by "two...," followed by "one...," followed by "sold," where the term "sold" indicates expiration of a predetermined time interval and that an item has been sold (subject to approval) to the highest bidder. Subject to approval typically means subject to the decision of the insured vehicle owner to relinquish rather than retain the vehicle.

The presentation of the phrases listed above, or other suitable messages, may be timed so as to encourage maximum bids. In certain embodiments, for example, the amount of time between the presentation of the phrases "one..." and "sold" is greater than the amount of time between the presentation of the other phrases. This provides an extra measure of time to receive bids. The extra measure of time allows virtual bid component 220 to accept bids from hesitant bidders who may pause before finally submitting "last second" bids.

The countdown sequence may include audio and/or other types of messages. In certain embodiments, for example, the countdown sequence includes audio playback of the phrase "going once..., going twice..., ... sold," with each word being presented a predetermined time after the previous word. Audio messages may be designed to help create a virtual bidding environment that emulates aspects of a live auction. This is especially useful to bidders who use a voice interface to participate in the bidding process. Regardless of the form(s) in which the countdown sequence is presented, the presentation should serve to encourage bidders to submit bids over data communication network 120.

In the virtual bid stage, an item may be deemed to be sold when no subsequent virtual bids are received within a predetermined time interval after the current bid was accepted (e.g., before the end of a countdown period). However, a valid bid received at any time within the predetermined time interval will reset both the countdown timer and the countdown sequence. A valid bid may comprise any bid greater than the current bid or any bid greater than the current bid by at least a predetermined increment. The countdown timer and sequence may be repeatedly reset as long as bids are received within the countdown time interval. Accordingly, as long as bidders continue to submit bids within the predetermined time intervals, the virtual bid stage remains open and continues to solicit virtual bids. Thus, the virtual bid stage may continue for an indefinite time period, subject to the continual receipt of additional high bids.

The amount of time allotted between bids (i.e., the countdown time after a bid is received) may remain constant throughout a virtual bid process or may change dynamically based on the virtual bids received. For example, the time interval may be reduced as bidding advances. Merely by way of illustration, virtual bid component 220 may be configured to reduce the time interval allotted between virtual bids once a predetermined number of virtual bids have been received. Further time interval reductions may be executed at different predetermined stages (e.g., when other thresholds of predetermined numbers of virtual bids have been reached). By dynamically reducing the time intervals between bids as bidding progresses, virtual bid component 220 may encourage bidders to submit higher bids early in the virtual bid process and/or to submit proxy bids to invoke and leverage time interval reductions. In certain cases, this may help shorten the overall time to determine the highest bid for a vehicle. It is desirable to minimize the time required to reach the ultimate high bid for each vehicle so that the process is as efficient for both buyers and sellers as possible.

As described above, in alternative embodiments, submission of proxy bids may be supported in the virtual bid stage. In the same or similar manner of placing proxy bids in the preliminary bid stage, virtual bid component 220 may be configured to automatically place proxy bids on behalf of bidders during the virtual bid stage. Virtual bid component 220 may be configured to receive proxy bids submitted during the virtual bid stage. For example, virtual bid component 220 may treat submitted bids greater than a predetermined bid increment as proxy bids. In exemplary embodiments, however, virtual bid component 220 may be configured to treat bids submitted during the virtual bid stage as normal bids without invoking proxy bidding features.

In certain embodiments, proxy bids are carried forward from the preliminary bid stage to the virtual bid stage. For example, any unused proxy bid authority remaining from the preliminary bid stage (e.g., proxy bid authority associated with the highest bidder) may be carried over to the virtual bid stage. Use of proxy bids in both stages may help reduce bidding time and thereby increase overall returns.

As shown in Figure 4, bid section 430 may include a bid matrix 450 comprising one or more selectable mechanisms (e.g., icons or buttons) that provide bidders with readily selectable options for submitting bids. As shown, a bid amount may be associated with each mechanism. Virtual bid component 220 may be configured to recognize a bidder selection of any one of the mechanisms and respond by posting a bid equal to the bid amount associated with the selected mechanism. Consequently, bidders are able to quickly place bids in any of the amounts associated with the icons, without having to take the time to manually enter (e.g., type) bid amounts. Thus, bid matrix 450 can reduce errors associated with entering bids and increase the ease, convenience, and speed of the virtual bid process.

The bid amounts in bid matrix 450 may be determined and set by virtual bid component 220 based on preliminary bidding, a starting bid in the virtual bid stage, or the current virtual bid amount. In certain embodiments, for example, the bid amounts in bid matrix 450 are a function of the starting virtual bid. In other embodiments, the bid amounts in bid matrix 450 are a function of the current virtual bid amount. The bid amounts may be dynamically updated when a new current bid is accepted. The differences between the bid amounts associated with the mechanisms may also be a function of a preliminary bid, a starting bid in the virtual bid stage, or the current virtual bid amount.

Bid matrices may be dynamically generated or predefined. A particular one of the predefined bid matrices may be selected and presented based on the current high virtual bid. Accordingly, virtual bid component 220 may maintain a library of bid matrices from which a particular bid matrix (e.g., bid matrix 450) may be retrieved and presented for consideration by a bidder.

As shown in Figure 4, bid log 440 may display a complete and dynamic history including an eventual display of the winning bid together with a location identifier associated with the winning bidder. The winning bid (i.e., the highest bid) may be used by valuation subsystem 110 to determine and set a vehicle salvage value, as described below. Once a vehicle is deemed to be sold to the highest bidder (subject to approval), virtual bid component 220 moves to the next vehicle in the batch, if one exists, and repeats the above-described virtual bid process. In this manner, the virtual bid stage determines high bids for vehicles in a batch in a consecutive, dynamic, and real-time manner until a high bid is determined for each of the vehicles, and the virtual bid stage associated with the batch is closed.

In certain embodiments, the sales of vehicles to the highest bidders are subject to the approval of insurance adjusters. Typically, an insurance adjuster is notified of the high bid received for a vehicle. The insurance adjuster informs a policyholder of the value of the vehicle as determined by the high bid received for the vehicle. The insurance adjuster gives the policyholder an option either to retain the vehicle and receive a payment for the pre-damage vehicle value less the high bid received for the damaged vehicle or to relinquish the vehicle and receive a payment for the pre-damage vehicle value. The insurance adjuster may then accept or reject the high bid for the vehicle based on the decision of the policyholder to either retain or relinquish the vehicle. Because insurance adjusters are allowed to accept or reject sales based on policyholder decisions, bid module 150 may notify bidders that all sales are "on approval." In certain embodiments, bid module 150 may be configured to notify bidders that when insurance adjusters refuse to accept high bids, the high bidders will earn a reward for being the highest bidders, as described below.

In other embodiments, sales of vehicles to the highest bidders may be made subject to the approval of insurance agents or other individuals with authority to authorize the sale. For example, insurance agents may use determined vehicle values, including salvage values set by valuation module 170, to determine dispositions of vehicles. In particular, insurance agents may use vehicle values determined by the bidding process being described here to decide whether to repair of total particular vehicles. When an insurance agent elects to repair a vehicle, the sale of the vehicle to the highest bidder will be canceled. When an insurance agent elects to total a vehicle, the sale of the vehicle may still be subject to the approval of the corresponding policyholder who may elect to retain the vehicle.

Bid module 150 may be configured to generate bid record 188, which may be stored to data store 140. Bid record 188 may include any data representative of one or more bid processes and events performed by bid module 150. For example, bid record 188 may include, but is not limited to, data representative of bids received for vehicles, high bids for vehicles, messages presented to bidders (e.g., countdown sequences), vehicle information, bidder information, timestamps, and information associated with access devices 104 that participate in bid processes (e.g., IP addresses). Bid record 188 may include server logs and/or any other suitable data representative of interactions between bid module 150 and access devices 104.

Bid record 188 may be used as evidence of bids received for vehicles and the processes used to solicit and receive the bids. Accordingly, insurance companies can rely on bid record 188 to show compliance with governmental regulations or that fair processes were used to determine vehicle values. In certain embodiments, bid record 188 can be used to show that a bid at least approximately equal to a determined vehicle salvage value was received from a qualified and legitimate bidder. Thus, bid record 188 can be used to protect insurance companies from potential allegations related to the setting of vehicle values. Bid record 188 can also serve to protect policyholders by ensuring that a determination of vehicle value is based on a fair bid process that receives legitimate bids from qualified and interested bidders.

Bid module 150 may be configured to generate bid results 185, which may include data representative of bid processes preformed by bid module 105 and/or the outcomes of the bid processes. In certain embodiments, for example, bid results 190 include one or more high bids received for one or more vehicles (e.g., a batch of vehicles). In other embodiments, bid results 190 may include data representative of all bids received for one or more vehicles. As described below, bid results 190 may be used by valuation module 170 to determine and set vehicle values based on the bid results 190.

While an exemplary two-stage bid process has been described, bid module 150 may be configured to perform alternative bid processes, including any bid process suitable for soliciting and receiving bids for vehicles over data communication network 120. For example, either of the bid stages described above may be performed independently of the other bid stage. For instance, in certain embodiments, the virtual bid stage may be performed and the preliminary bid stage omitted. When the virtual bid stage is performed without the preliminary bid stage being performed first, starting virtual bids may be set to predefined default amounts, as described above.

### 4. Valuation Module

Referring again to Figure 1, valuation module 170 may receive bid results 190, or at least a subset of bid results 190, from bid module 150. Valuation module 170 may be configured to set values for vehicles based on data included in bid results 190. In particular, valuation module 170 may set a salvage value for a vehicle based on one or more bids received for the vehicle, as represented in the bid results 190.

Valuation module 170 may be configured with predefined instructions (e.g., software) useful for setting a vehicle value based on the bid results 190. The predefined instructions may be programmable to allow for modifications such that valuation module 170 may be tailored to particular implementations of system 100. In certain embodiments, valuation module 170 is configured to set a salvage value at least approximately equal to the value of the highest bid received for the corresponding vehicle. Other embodiments may set a vehicle value according to different predefined instructions. For example, valuation module 170 may be configured to set a vehicle value to a computed average of bids received for the corresponding vehicle or to a value that is a predetermined percentage or increment greater than or less than the highest bid received. Valuation module 170 may be configured to use any other suitable logic for setting vehicle values based on bid results 190. By basing vehicle values on actual bids received for the vehicles, valuation module 170 sets vehicle values based on the fair market values of the vehicles.

Once a vehicle value is set, valuation module 170 may provide the value to notification module 180.

### 5. Notification Module

Notification module 180 may be configured to provide vehicle values received from valuation module 170 to one more access devices 104 over data communication network 120. For example, notification module 180 may provide a vehicle value to one or more particular access devices 104, including a particular access device associated with a particular user who provided data representative of the vehicle corresponding with the vehicle value. Typically, this user is an agent of an insurance company (e.g., an insurance adjuster) who is able to use the vehicle value to choose whether to repair or "total" the vehicle and/or to notify a policyholder of available options, including actual amounts that the insurance company will offer to pay the policyholder. For example, the insurance adjuster may notify the policyholder of the pre-damage cash value that will be paid to the policyholder should he or she choose to relinquish the vehicle, as well as the amount that will be paid to the policyholder should he or she choose to retain the vehicle (i.e., the pre-damage cash value less the salvage value set by valuation module 170). The policyholder is then able to make an educated decision taking into account a fair market salvage value of the vehicle.

In other embodiments, notification module 180 may be configured to provide a vehicle value to a particular access device 104 associated with a particular policyholder. For example, when an insurance adjuster submits vehicle data 185 for a vehicle, the insurance adjuster may also provide contact information for the policyholder associated with the vehicle. Notification module 180 may use the contact information to provide information (e.g., a determined salvage value) to the policyholder through data communication network 120. By directly notifying the policyholder, both the workload of an insurance adjuster and the time to receive a response (i.e., a decision) from the policyholder may be reduced.

Notification module 180 may employ any suitable technologies to provide notifications and other information to users of access devices 104 through data communication network 120. For example, notification module 180 may communicate with one or more access devices 104 over data communication network 120 using one or more HTML messages (e.g., web pages), e-mail messages, instant messaging services, text messaging services, paging services, automated telephone messages, and any other suitable communication technologies. In certain embodiments, for example, notification module 180 is configured to post notifications to one or more web pages accessible by a particular insurance adjuster. In other embodiments, notification module 180 may be configured to send an e-mail message including a vehicle value to a particular insurance adjuster.

Notification module 180 may also be configured to receive data representative of policyholder decisions over data communication network 120. The decisions may be received directly from policyholders or indirectly from other parties such as insurance adjusters. For example, an insurance adjuster may communicate with and receive a decision from a particular policyholder using the data communication network 120. The insurance adjuster may then use any particular access device 104 to provide data representative of the decision of the policyholder to notification module 180 over data communication network 120. For example, the insurance adjuster may use an HTML template to upload the data to notification module 180.

Notification module 180 may be configured to generate a default decision if a sale approval, i.e., a policyholder decision, is not received within a predetermined timeout interval. In certain embodiments, for example, notification module 180 is configured to reject a sale if a policyholder decision is not received within approximately seventy-two hours after notification of the salvage value has been sent. Of course, any suitable length of time could be used. A predetermined timeout default decision can benefit bidders by limiting the amount of time that they are kept waiting for policyholder decisions.

Once the decision of a policyholder is received, notification module 180 may notify the highest bidder of the decision. In particular, notification module 180 may notify the highest bidder as to whether the policyholder has decided to relinquish or retain the corresponding vehicle. Accordingly, the highest bidder can learn whether the sale of the vehicle has been approved or rejected. A notification to the highest bidder may include additional information such as information concerning steps for completing an approved transaction (e.g., transaction details and logistics) or information associated with a rejected transaction (information associated with highest bidder rewards). Notification module 180 may be configured to use any of the communication technologies described above to provide notifications over data communication network 120 to access devices 104 associated with bidders.

Valuation subsystem 110 may take different actions based on the decision of a policyholder. For example, when a policyholder chooses to relinquish a vehicle, valuation subsystem 110 may be configured to perform operations designed to help complete the sale of the vehicle to the highest bidder. On the other hand, when a policyholder chooses to retain the vehicle, valuation subsystem 110 may perform operations designed to reward the highest bidder for placing the highest bid on the vehicle. Each of these options will now be described in additional detail.

### 6. Transaction Module

When a policyholder chooses to relinquish a vehicle, notification module 180 can alert transaction module 182 of the decision. Transaction module 182 may then perform operations designed to help complete the sale of the vehicle to the highest bidder. For example, transaction module 182 may be configured to accept payment from the highest bidder or an agent of the highest bidder. For instance, transaction module 182 may be configured to receive and process credit card information, or to process any acceptable payment method.

Transaction module 182 may be configured to perform functions helpful for processing vehicles titles. The processing of vehicle titles to complete a sale of vehicles will be understood by those skilled in the art. In certain embodiments, if title is not transferred within a predetermined time interval after approval of a sale, the highest bidder is given an opportunity to either continue with the transaction or cancel the sale. The highest bidder may also be given an opportunity to cancel a sale under other circumstances, including when items have been removed or replaced on a vehicle or when the vehicle has incurred additional damage since the winning bid was submitted.

Transaction module 182 may be further configured to perform functions associated with transportation and/or pickup of vehicles, including, for example, identifying transportation and/or pickup options based on the location of the vehicle and the location of the highest bidder. Transaction module 182 may provide the options to notification module 180, which may notify the highest bidder of the options, thereby allowing the highest bidder to select one of the options for transport or pick-up of the vehicle.

### 7. Reward Module

When a policyholder chooses to retain a vehicle, reward module 184 may be configured to assign a predefined reward to the highest bidder. Notification module 180 can alert reward module 184 of the decision of the policyholder to retain the vehicle. Reward module 184 can then assign the predefined reward to the highest bidder, and notification module 180 can notify the highest bidder that the reward has been given or credited to that bidder.

The predefined reward may be designed to motivate bidders to bid on vehicles. For example, bid module 150 may be configured to notify bidders that the highest bid, if rejected by a policyholder, will earn the high bidder a predefined reward. Accordingly, bidders may be more likely to vie to become the highest bidder because of the potential of receiving a reward simply for being the highest bidder. This may result in increased bid quantities and values.

Rewards may be provided to bidders in any suitable manner, including providing monetary payment, credit, gift cards, or any known form of reward.

### III. EXEMPLARY PROCESS VIEW

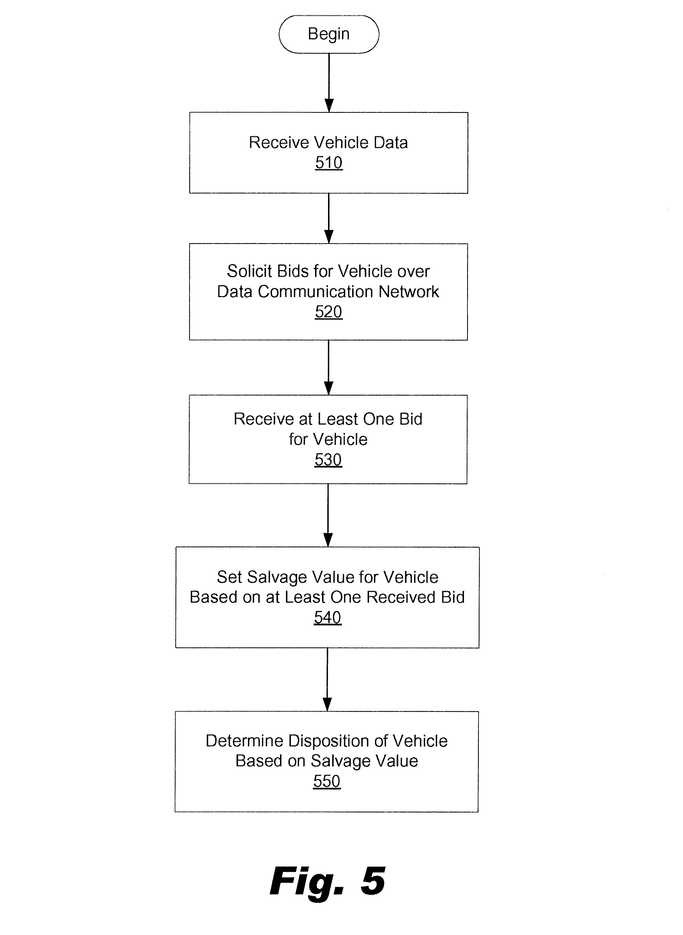

Figure 5 illustrates an exemplary process for determining salvage value for a vehicle. While Figure 5 illustrates exemplary steps according to one embodiment, other embodiments may omit, add to, reorder and/or modify any of the steps shown in Figure 5.

In step 510, vehicle data (e.g., vehicle data 185) is received. Step 510 may be performed in any of the ways described above, including an agent of an insurance company using an access device (e.g., access device 104-1) to provide vehicle data to valuation subsystem 110 over a data communication network (e.g., data communication network 120).

In step 520, bids for a vehicle are solicited over a data communication network (e.g., data communication network 120). Step 520 may be performed in any of the ways described above, including posting at least a subset of vehicle data (e.g., vehicle data 185) such that the data is accessible to one or more access devices (e.g., access devices 104) over a data communication network. Accordingly, bidders are able to use the access devices to consider posted vehicle data and to submit bids on the corresponding vehicle.

In step 530, at least one bid for the vehicle is received. Step 530 may be performed in any of the ways described above. Typically, one or more bids for the vehicle are submitted by bidders and received over a data communication network (e.g., data communication network 120). If no bids are received over the data communication network for the vehicle, valuation subsystem 110 may place a predetermined default bid on behalf of another party (e.g., a junk buyer), as described above.

In certain embodiments, performance of step 530 includes using a two-stage bid process such as the two-stage bid process described above. Other embodiments may use alternative bid processes to receive bids over data communication network 120.

In step 540, a salvage value is set for the vehicle based on at least one received bid. Step 540 may be performed in any of the ways described above, including setting a salvage value equal to, or at least approximately equal to, the high bid received for the vehicle.

In step 550, a disposition of the vehicle is determined based on the salvage value of the vehicle as determined in step 540. The determination may be based on a decision of an insurance agent regarding whether to repair or total a vehicle. Alternative to or in addition to an insurance agent decision regarding a vehicle, the disposition of the vehicle may be based on a decision of a policyholder to retain or relinquish the vehicle.

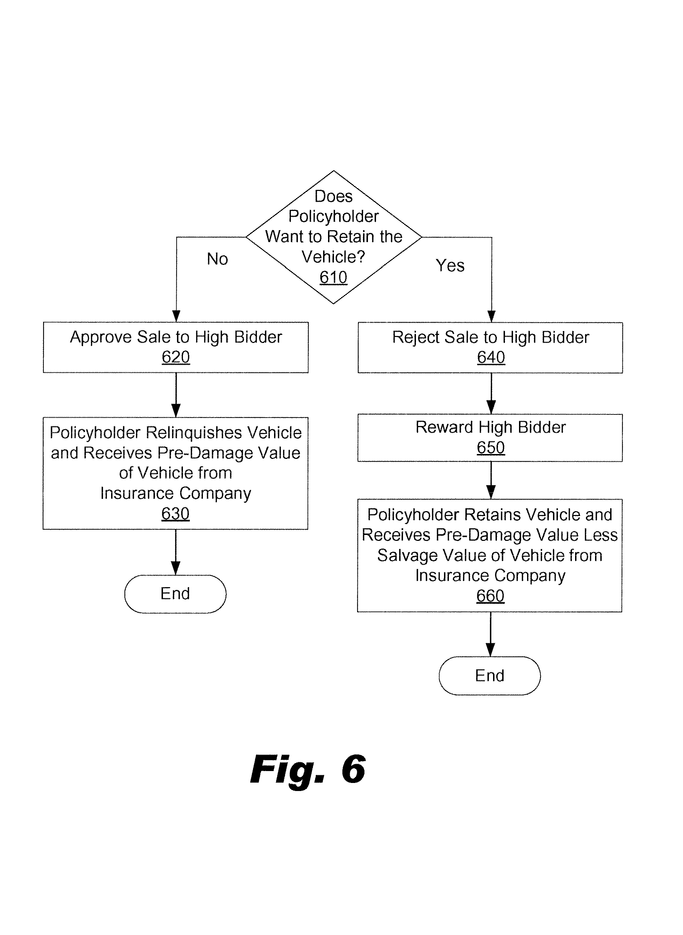

Step 550 may be performed in accordance with the exemplary process illustrated in Figure 6, which shows a process for determining a disposition of a vehicle based on vehicle salvage value. While Figure 6 illustrates exemplary steps according to one embodiment, other embodiments may omit, reorder, add to, and/or modify any of the steps shown in Figure 6.

In step 610, it is determined whether the policyholder associated with the vehicle wants to retain the vehicle. Step 610 may be performed in any of the ways described above, including notifying an insurance agent and/or policyholder of the salvage value and receiving data representative of a policyholder decision as to whether the policyholder wishes to retain or relinquish the vehicle. A default decision may be entered automatically if a policyholder decision is not received within a predetermined timeout interval, as described above. The disposition of the vehicle may then be determined based on either the policyholder decision or the default decision.

If it is determined at step 610 that the policyholder does not want to retain the vehicle, processing moves to step 620, at which step the sale of the vehicle to the high bidder is approved. Step 620 may be performed in any of the ways described above, including notifying the high bidder that the sale is approved and performing steps helpful for completing the transaction. For example, payment and delivery or pickup of the vehicle can be arranged. In addition, the insurance company may be paid the high bid amount, or a portion of the high bid amount, for the vehicle.

In step 630, the policyholder relinquishes the vehicle and receives the pre-damage value of the vehicle from the insurance company.

On the other hand, if it is determined at step 610 that the policyholder wants to retain the vehicle, processing moves to step 640, at which step the sale of the vehicle to the high bidder is rejected. Step 640 may be performed in any of the ways described above, including notifying the high bidder that the sale is rejected.

In step 650, the high bidder is rewarded. Step 650 may be performed in any of the ways described above, including assigning a predetermined reward to the high bidder.

In step 660, the policyholder retains the vehicle and receives the pre-damage value less the salvage value of the vehicle from the insurance company. As described above, the insurance company typically benefits from the salvage value being determined based on one or more bids received over a data communication network because such a bid process generally helps to increase and document the quantity and value of bids for a vehicle. This results in savings for the insurance company. The savings may be passed on to policyholders, as discussed above.

### IV. ALTERNATIVE EMBODIMENTS

The preceding description has been presented only to illustrate and describe embodiments of the principles described herein. It is not intended to be exhaustive or to limit the disclosure to any precise form disclosed. The principles described herein may be practiced otherwise than is specifically explained and illustrated without departing from their spirit or scope. For example, salvage values for items or services other than vehicles may be determined based on one or more bids received for the items or services over a data communication network. Moreover, types of values other than salvage values may be determined based on one or more bids received over a data communication network. The determined values can then be used to determine dispositions of the associated items or services. It is intended that the scope of the invention be defined by the following claims.

## Claims

1. A system comprising:
a valuation subsystem configured to communicate with one or more access devices over a data communication network, said valuation subsystem including:
a bid module configured to
solicit bids for a vehicle over the data communication network, and receive one or more bids for the vehicle; and
a valuation module configured to set a salvage value of the vehicle based on at least one of said one or more bids received.

2. The system of claim 1, wherein said one or more bids received includes a high bid, said valuation module being configured to set said salvage value approximately equal to said high bid.

3. The system of claim 1 or 2, wherein said valuation subsystem includes an input module configured to receive, over the data communication network, vehicle data descriptive of the vehicle.

4. The system of claim 3, wherein said vehicle data includes one or more visual images of the vehicle.

5. The system of claim 1, 2, 3 or 4 wherein said valuation subsystem includes a notification module configured to provide notification of said salvage value to at least one of the one or more access devices over the data communication network.

6. The system of claim 5, wherein said notification module is configured to receive, over the data communication network, data representative of a decision of an insurance agent to either repair or total the vehicle.

7. The system of claim 5, wherein said notification module is configured to receive, over the data communication network, data representative of a decision of an insurance policyholder associated with the vehicle to either retain or relinquish the vehicle.

8. The system of claim 7, wherein said valuation subsystem is configured to:
approve a sale of the vehicle to a high bidder when said data representative of the decision indicates that the insurance policyholder decided to relinquish the vehicle; and
reject the sale of the vehicle to the high bidder when said data representative of the decision indicates that the insurance policyholder decided to retain the vehicle.

9. The system of claim 7, wherein said valuation subsystem includes a reward module configured to assign a reward to a high bidder when said data representative of the decision indicates that the insurance policyholder decided to retain the vehicle.

10. The system of any one of the preceding claims, wherein said bid module is configured to solicit virtual bids in real time over the data communication network.

11. The system of claim 10, wherein said bid module is configured to solicit said virtual bids until a predetermined time interval has passed without receipt of a virtual bid within the predetermined time interval.

12. The system of claim 11, wherein said bid module is configured to identify a high bid for the vehicle once the predetermined time interval has passed without receipt of said virtual bid within the predetermined time interval, said valuation module being configured to set said salvage value approximately equal to said high bid.

13. The system of claim 11, wherein said bid module is configured to provide a countdown sequence representative of a countdown to expiration of the predetermined time interval, said countdown sequence being provided to the one or more access device over the data communication network for presentation by the one or more access devices.

14. The system of claim 13, wherein said countdown sequence includes a plurality of phrases configured to be presented in sequential order for consideration by one or more bidders using the one or more access devices.

15. The system of any one of the preceding claims, wherein said bid module comprises:
a preliminary bid component configured to solicit, over the data communication network, preliminary bids during a preliminary bid stage and to close said preliminary bid stage at a predetermined time; and
a virtual bid component configured to open a virtual bid stage after said closure of said preliminary bid stage and to solicit virtual bids in real-time over the data communication network during said virtual bid stage.

16. The system of claim 15, wherein said virtual bid stage is configured to use a high preliminary bid received during said preliminary bid stage as a starting virtual bid in said virtual bid stage.

17. A system comprising:
a valuation subsystem configured to communicate with one or more access devices over a data communication network, said valuation subsystem including:
an input module configured to receive, over the data communication network, vehicle data descriptive of a vehicle;
a bid module configured to
solicit bids for the vehicle over the data communication network, including posting at least a subset of said vehicle data for access by at least a subset of the one or more access devices over the data communication network, and
receive one or more bids for the vehicle; a valuation module configured to set a salvage value of the vehicle based on at least one of said one or more bids received; and
a notification module configured to
provide notification of said salvage value to at least one of the one or more access devices over the data communication network and,
receive, over the data communication network, data representative of a decision of an insurance policyholder associated with the vehicle to either retain or relinquish the vehicle;
wherein said valuation subsystem is configured to
approve a sale of the vehicle to a high bidder when said data representative of the decision indicates that the insurance policyholder decided to relinquish the vehicle; and
reject the sale of the vehicle to the high bidder when said data representative of the decision indicates that the insurance policyholder decided to retain the vehicle.

18. The system of claim 17, wherein said bid module comprises:
a preliminary bid component configured to solicit, over the data communication network, preliminary bids during a preliminary bid stage and to close said preliminary bid stage at a predetermined time; and
a virtual bid component configured to open a virtual bid stage after said closure of said preliminary bid stage, use a high preliminary bid received during said preliminary bid stage as a starting virtual bid in said virtual bid stage, and solicit virtual bids in real-time over the data communication network during said virtual bid stage.

19. A method comprising:
soliciting, over a data communication network, bids for a vehicle;
receiving one or more bids for the vehicle; and
setting a salvage value for the vehicle based on at least one of the one or more bids received.

20. The method of claim 19, wherein said setting step includes:
identifying a high bid from the one or more bids received; and
setting the salvage value approximately equal to the high bid.

21. The method of claim 19 or 20, further comprising:
receiving vehicle data descriptive of the vehicle over the data communication network,
said soliciting step including posting at least a subset of the vehicle data for access by one or more access devices over the data communication network.

22. The method of claim 19, 20 or 21, further comprising providing notification of the salvage value to at least one access device over the data communication network.

23. The method of claim 22, further comprising receiving, over the data communication network, data representative of a decision of an insurance agent to either repair or total the vehicle.

24. The method of claim 22 or 23, further comprising receiving, over the data communication network, data representative of a decision of an insurance policyholder to either retain or relinquish the vehicle.

25. The method If claim 24, further comprising:
approving a sale of the vehicle to a high bidder when the data representative of the decision indicates that the insurance policyholder decided to relinquish the vehicle; and
rejecting the sale of the vehicle to the high bidder when the data representative of the decision indicates that the insurance policyholder decided to retain the vehicle.

26. The method of claim 24 or 25, further comprising rewarding a high bidder when the data representative of the decision indicates that the insurance policyholder decided to retain the vehicle.

27. The method of any one of claims 19 to 26, wherein said soliciting step includes soliciting virtual bids in real time over the data communication network.

28. The method of any one of claims 19 to 26, wherein said soliciting step includes soliciting virtual bids in real time over the data communication network until a predetermined time interval has passed without receipt of a virtual bid within the predetermined time interval.

29. The method of claim 28, further comprising providing a countdown sequence representative of a countdown to expiration of the predetermined time interval, the countdown sequence being provided to one or more access devices over the data communication network.

30. The method of claim 29, further comprising sequentially presenting a plurality of phrases for consideration by one or more bidders using the one or more access devices, said sequential presentation being in accordance with the countdown until expiration of the predetermined time interval.

31. The method of any one of claims 19 to 26, wherein said soliciting step includes:
soliciting, over the data communication network, preliminary bids during a preliminary bid stage;
closing the preliminary bid stage at a predetermined time;
opening a virtual bid stage after said closing of the preliminary bid stage; and
soliciting virtual bids in real-time over the data communication network during the virtual bid stage.

32. The method of claim 31, wherein said soliciting step includes using a high preliminary bid received during the preliminary bid stage as a starting virtual bid in the virtual bid stage.

33. Apparatus for automatically determining a salvage value for a vehicle, the apparatus comprising:
means for communicating over a data communication network with at least one access device;
means for soliciting and receiving bids for a vehicle over the data communication network; and
means for calculating the salvage value for the vehicle based on at least one of the bids received and based on predetermined conditions.
